# EUROPEAN PATENT APPLICATION

(11) **EP 2 597 841 A1**
(43) Date of publication of application: **29.05.2013**
(21) Application number: 12182278.7
(22) Date of filing: 29.08.2012
(51) Int. Cl.: H04L 29/08, H04N 21/81

(54) **Display apparatus and control method thereof, apparatus providing application and control method thereof**

(30) Priority: 24.11.2011 KR 20110123388
(71) Applicant: Samsung Electronics Co., Ltd., Suwon-si, Gyeonggi-do, 443-742 (KR)
(72) Inventor: Kim, Seok-hyun, Gyeonggi-do (KR); Lee, Sang-hee, Seoul (KR); Kim, Dae-hyun, Gyeonggi-do (KR)
(74) Representative: Fearnside, Andrew Simon

(57) **Abstract**

Disclosed are a display apparatus and a control method thereof which communicate with each other to provide and receive at least one application, an apparatus providing the at least one application and a control method thereof, the display apparatus including: a display unit; a communication unit which communicates with a server that provides a plurality of applications and a list of the plurality of applications; a storage unit which stores therein at least one application downloaded through the communication unit and deletion history information of the at least one application; and a controller which displays on the display unit an image of the list of the plurality of applications to download the at least one application, and transmits to the server the deletion history information of the at least one application to display on the display unit deletion/non-deletion of the at least one application in the image of the list of the plurality of applications.

## Description

### BACKGROUND

### 1. Field

Apparatuses and methods consistent with the exemplary embodiments relate to a display apparatus and a control method thereof which communicates to provide and receive an application, an apparatus providing an application and a control method thereof, and more particularly, to a display apparatus and a control method thereof, an apparatus providing an application and a control method thereof which desirably improves a display method of an application list image selectively to download the application.

### 2. Description of the Related Art

A display apparatus processes an input image signal which is provided by an external image supply source by various methods, and displays an image on a display panel including a liquid crystal display (LCD) panel by using the processed image signal. A display apparatus which is provided to normal users includes a TV or a monitor. For example, a TV as a display apparatus tunes, decodes and performs other processes for a broadcasting signal transmitted from the outside to provide a user with an image of a desired broadcasting channel.

In line with technical development and increased contents, the display apparatus does not merely provide images, but performs more and complicated functions. The display apparatus, as a client connected to a server through a network, may transmit and receive various data to/from the server. The display apparatus downloads from the server, and executes, various types of applications including games and other application programs. Such applications may enhance functions of the display apparatus. The server provides the display apparatus with an application list for a user to purchase and download various applications, and the display apparatus may select an application from the list provided by the server.

### SUMMARY

According to the present invention there is provided an apparatus and method as set forth in the appended claims. Other features of the invention will be apparent from the dependent claims, and the description which follows. According to an aspect, there is provided a display apparatus including: a display unit; a communication unit which communicates with a server that provides a plurality of applications and a list of the plurality of applications; a storage unit which stores therein an application downloaded through the communication unit and deletion history information on at least one application; and a controller which displays on the display unit an image of the list of the plurality of applications to download the at least one application, and transmits to the server the deletion history information of the at least one application to display on the display unit deletion/non-deletion of the at least one application in the image of the list.

The image of the list may include a first image which displays an item for each of the plurality of applications, and a second image which displays detailed information of each of the plurality of applications, and the deletion/non-deletion of the at least one application is displayed in at least one of the first and second images.

The controller may transmit the deletion history information of the at least one application through the communication unit when the at least one application is deleted.

The controller may transmit user profile information to the server so that the server provides the list corresponding to a user profile of the display apparatus.

The image of the list may further include purchase information of the at least one application if a user corresponding to the user profile has purchased the at least one application for downloading.

The controller may store in the storage unit the deletion history information of the at least one application according to the deletion of the at least one application, and transmit the deletion history information stored in the storage unit, together with the user profile information, through the communication unit.

The display apparatus may further include a user input unit which is used to input the user profile information, and the controller may transmit the user profile information input through the user input unit, through the communication unit.

The storage unit may store therein the user profile information, and the controller may transmit the user profile information stored in the storage unit, through the communication unit.

According to another aspect, there is provided an application providing apparatus including: a communication unit which communicates with a display apparatus; a storage unit which stores therein a plurality of applications; and a processor which transmits a list of the plurality of applications to the display apparatus for downloading at least one application and displays an image of the list of the plurality of applications in the display apparatus, and upon receiving deletion history information showing deletion of at least one application from the display apparatus, processes the list to display information on the deletion/non-deletion of the at least one application from the display apparatus, in an image of the list according to the deletion history information.

The image of the list may include a first image which displays an item for each of the plurality of applications, and a second image which displays detailed information of each of the plurality of applications, and the deletion/non-deletion of the at least one application is displayed in at least one of the first and second images.

The processor may transmit the list to the display apparatus corresponding to a user profile if the user profile is transmitted by the display apparatus.

The image of the list may further include purchase information of the at least one application if a user corresponding to the user profile has purchased the application for downloading.

According to another aspect, there is provided a control method of a display apparatus, the control method including: deleting at least one application which is stored in the display apparatus; transmitting deletion history information of the at least one application to display deletion/non-deletion of the at least one application in an image of a list of a plurality of applications available for downloading, with respect to a server which provides the plurality of applications; and displaying an image of the list by receiving the list displaying deletion/non-deletion of the at least one application from the server.

The image of the list may include a first image which displays an item for each of the plurality of applications, and a second image which displays detailed information of each the plurality of applications, and the deletion/non-deletion of the at least one application is displayed in at least one of the first and second images.

The transmitting the deletion history information of the application may include transmitting user profile information to the server so that the server provides the list corresponding to a user profile of the display apparatus.

The image of the list may further include purchase information of the at least one application if a user corresponding to the user profile has purchased the at least one application for downloading.

According to another aspect, there is provided a control method of an application providing apparatus, the control method including: receiving deletion history information showing deletion of at least one of a plurality of stored applications from a display apparatus, from the display apparatus; generating a list of the at least one of the plurality of applications for the display apparatus to download the plurality of applications, and processing the list to display therein information on the deletion of the at least one application from the display apparatus according to the deletion history information; and transmitting the processed list to the display apparatus to display an image of the processed list in the display apparatus.

The image of the list may include a first image which displays an item for each of the plurality of applications, and a second image which displays detailed information of each of the plurality of applications, and the deletion/non-deletion of the at least one application is displayed in at least one of the first and second images.

The receiving the deletion history information from the display apparatus may include receiving a user profile from the display apparatus, and the generating and processing the list may include generating the list corresponding to the user profile.

The image of the list may further include purchase information of the at least one application if a user corresponding to the user profile has purchased the at least one application for downloading.

### BRIEF DESCRIPTION OF THE DRAWINGS

The above and/or other aspects will become apparent and more readily appreciated from the following description of the exemplary embodiments, taken in conjunction with the accompanying drawings, in which:

FIG. 1 is a block diagram of a display apparatus and a server according to an exemplary embodiment;

FIG. 2 illustrates a concept of downloading and installation of an application which is executed between the display apparatus and the server in FIG. 1;

FIGS. 3 and 4 illustrate an example of an application list image which is displayed in the display apparatus in FIG. 1;

FIG. 5 is a control flowchart of a control method of the display apparatus in FIG. 1; and

FIG. 6 is a control flowchart of a control method of the server in FIG. 1.

### DETAILED DESCRIPTION OF EXEMPLARY EMBODIMENTS

Below, exemplary embodiments will be described in detail with reference to accompanying drawings so as to be easily realized by a person having ordinary knowledge in the art. The exemplary embodiments may be embodied in various forms without being limited to the exemplary embodiments set forth herein. Descriptions of well-known parts are omitted for clarity, and like reference numerals refer to like elements throughout.

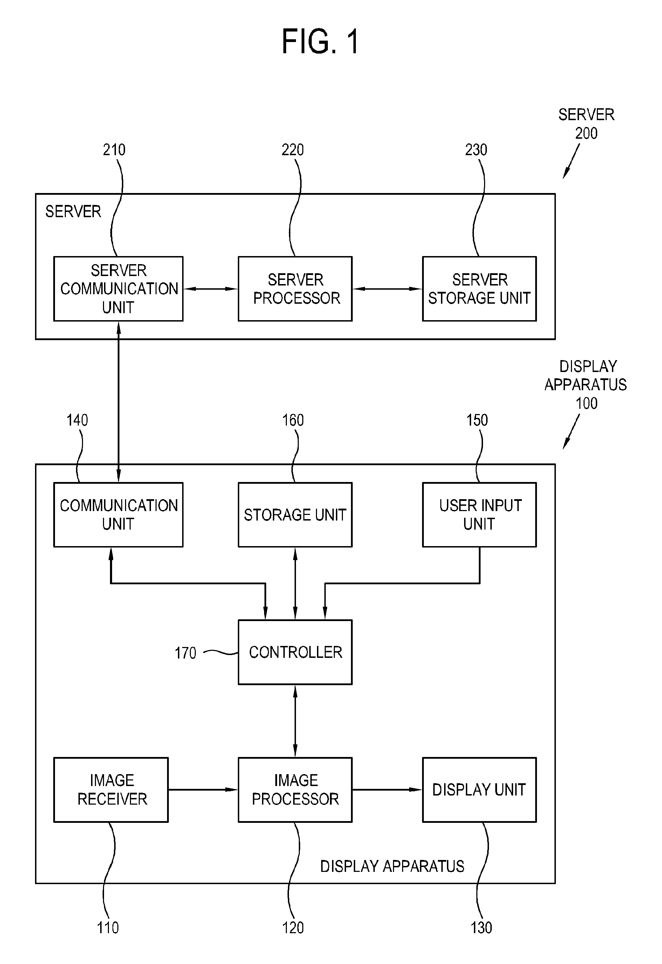

FIG. 1 is a block diagram of a system including a display apparatus 100 and a server 200 according to an exemplary embodiment.

As shown therein, the system includes the display apparatus 100, and the server 200 which transmits and receives data to/from the display apparatus 100.

The display apparatus 100 includes an image receiver 110 which receives an image signal from an external image supply source (not shown); an image processor 120 which processes an image signal transmitted to the image receiver 110, by an image processing operation; a display unit 130 which displays thereon an image with the image signal processed by the image processor 120; a communication unit 140 which communicates with the server 200 and transmits and receives signals, data and information which may include various types without limitation, that is, unlimited signals, data and information to/from the server 200; a user input unit 150 which receives a preset command/information by a user's manipulation; a storage unit 160 which stores therein unlimited signals, data, and information; and a controller 170 which controls overall operations of the display apparatus 100.

The display apparatus 100 may include a device which displays an image based on an image signal or image data and receives data from the outside. The display apparatus 100 may include a TV, a portable multimedia player (PMP), a mobile phone or other types of devices.

The server 200 or an application providing device 200 includes a server communication unit 210 which communicates with the display apparatus 100; a server processor 220 which controls various operations of the server 200; and a server storage unit 230 which is accessed by the server processor 220 and stores therein unlimited signals, data and information.

Hereinafter, each element of the display apparatus 100 will be described.

The image receiver 110 receives an image signal in a wired/wireless manner from an external image supply source (not shown) and transmits the signal to the image processor 120. The image receiver 110 varies depending on a standard of the received image signal and an embodiment of the display apparatus 100. For example, if the display apparatus 100 includes a TV, the image receiver 110 may receive a radio frequency (RF) signal transmitted by a broadcasting station (not shown), or an image signal according to standards such as composite/component video, super video, SCART, high definition multimedia interface (HDMI), Display Port, unified display interface (UDI), wireless HD, etc. If an image signal is a broadcasting signal, the image receiver 110 includes a tuner to tune the broadcasting signal by channel.

If the display apparatus 100 comprises a PMP or a mobile phone, the display apparatus 100 may receive and transmit an image data packet to the image processor 120 through the communication unit 140 instead of receiving and transmitting an image signal though the image receiver 110.

The image processor 120 performs various image processing operations for an image signal that is transmitted by the image receiver 110. The image processor 120 outputs the processed image signal to the display unit 130 to display an image thereon based on the image signal.

The image processing operations performed by the image processor 120 may include, without limitation, e.g., a decoding operation corresponding to an image format of an image signal, a deinterlacing operation which converts an image signal from an interlace type to a progressive type, a scaling operation which scales an image signal into a preset resolution, a noise-reducing operation which improves a picture quality, a detail enhancement operation, and a frame refresh rate converting operation.

The image processor 120, together with the controller 160, is formed as an image processing board (not shown) on a system-on-chip (SOC) mounted on a printed circuit board (PCB). The image processing board may perform various functions or processes simultaneously or each process may be performed independently.

The display unit 130 displays an image thereon based on an image signal that is output by the image processor 120. The display unit 130 may include liquid crystal, plasma, light-emitting diode (LED), organic light-emitting diode (OLED), surface-conduction electron-emitter, carbon nano-tube, nano crystal, but not limited thereto.

The display unit 130 may further include other configurations depending on its embodiment method. For example, if the display unit 130 includes liquid crystal, it includes an LCD panel (not shown), a backlight unit (not shown) to emit light to the LCD panel, and a panel driving circuit (not shown) to drive the panel.

The communication unit 140 is connected to an external network according to a preset wired/wireless communication protocol, and enables the display apparatus 100 to communicate with the server 200 connected to the same network. The communication unit 140 performs interactive communication to enable the image processor 120 to transmit predetermined data to the server 200. That is, the communication unit 140 may transmit to the server 200 the data stored in the storage unit 160 or transmit to the controller 170 the data transmitted by the server 200, by a control of the controller 170.

The user input unit 150 transmits preset control commands or information to the controller 170 by a user's manipulation and input. The user input unit 150 includes a menu key or an input panel installed in an external side of the display apparatus 100, or a remote controller which is separated from the display apparatus 100.

Otherwise, the user input unit 150 may be integrally formed in the display unit 130. That is, if the display unit 130 includes a touch screen, a user may transmit a preset command to the controller 170 through an input menu (not shown) displayed on the display unit 130.

The storage unit 160 stores therein unlimited data by a control of the controller 170. The storage unit 160 includes a non-volatile memory such as a flash memory, or a hard disc drive. The storage unit 160 is accessed by the controller 170, and the controller 170 reads, records, revises, deletes or updates data stored in the storage unit 160. The storage unit 160 stores therein at least one application which is executed by the controller 170.

The controller 170 executes an application or program performing various functions, while an operating system (OS) as software is driven. Such OS and application are stored in the storage unit 160. The controller 170 may control overall operations of the display apparatus 100 based on the control operation.

Hereinafter, each element of the server 200 will be described.

The server communication unit 210 transmits and receives various data to/from the display apparatus 100. The server communication unit 210 transmits to the server processor 220 data transmitted by the display apparatus 100, or transmits to the display apparatus 100 data transmitted by the server processor 220. To do the foregoing, the server communication unit 210 is connected to a network by a preset protocol corresponding to the communication unit 140.

The server processor 220 performs a preset operation corresponding to data transmitted to the server communication unit 210. For example, the server 220 provides various types of applications to the display apparatus 100. To do the foregoing, the server processor 220 may provide the display apparatus 100 with a list of applications for purchasing and downloading an application stored in the server storage unit 230.

Upon receiving a request for purchasing and downloading the application from the display apparatus 100 through the server communication unit 210, the server processor 220 transmits to the display apparatus 100 the purchased application(s) and a downloaded list of the applications stored in the storage unit 160. Upon receiving a user profile from the display apparatus 100, the server processor 220 processes the information corresponding to the user profile to be included in the list. This will be described later in more detail.

The server storage unit 230 stores therein unlimited data by a control of the server processor 220. According to the present exemplary embodiment, the server storage unit 230 stores therein a plurality of applications provided by the server 200 to the display apparatus 100, and relevant information.

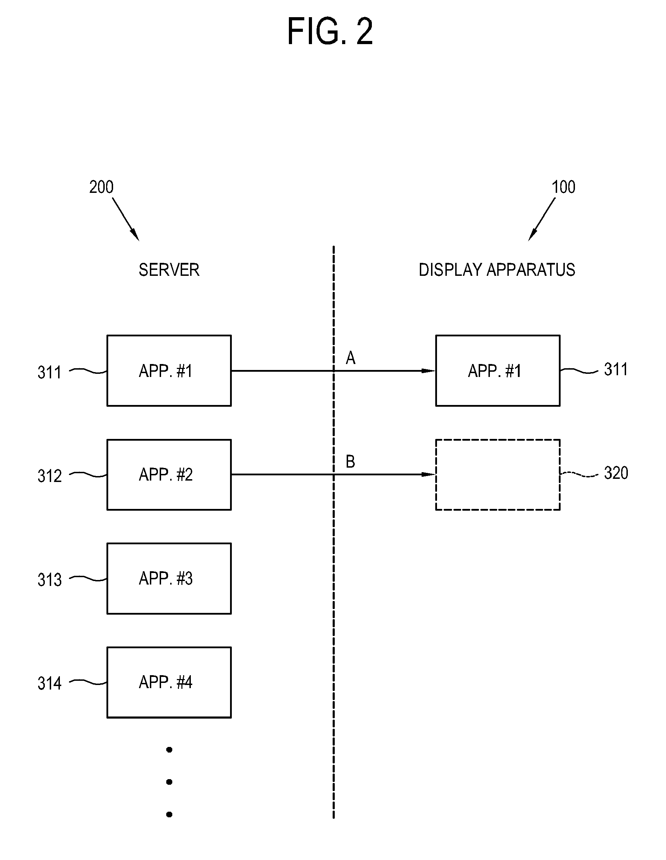

With the foregoing configuration, an example of purchasing, downloading and installing applications 311, 312, 313 and 314 by the display apparatus 100 from the server 200 will be described with reference to FIG. 2. FIG. 2 illustrates a concept for downloading and installing applications 311, 312, 313 and 314 which are executed between the display apparatus 100 and the server 200. Hereinafter, regarding operations of the display apparatus 100, the controller 170 will be the subject matter for the operations.

As shown therein, the display apparatus 100 may download from the server 200, and install, the applications 311, 312, 313 and 314. The display apparatus 100 transmits a user profile including a user ID and password to the server 200. Upon completion of authentication of the user profile, the server 200 provides the display apparatus 100 with the purchase and downloading service for the applications 311, 312, 313 and 314.

The server 200 permits downloading of the application 311, for which the purchase service has been performed, at the request of the display apparatus 100. The display apparatus 100 downloads the application 311 from the server 200 (A), and stores the downloaded application 311 in the storage unit 160 of the display apparatus 100.

At the time of storage of the application 311 in the storage unit 160, the display apparatus 100 installs the applications 311, 312, 313 and 314 in an operating system stored in the storage unit 160 to execute such applications 311, 312, 313 and 314 in the display apparatus 100.

The display apparatus 100 may delete the application from the storage unit 160. For example, the display apparatus 100 has downloaded the application 312 from the server 200 and installed the application 312 in the storage unit 160 (B), and then deleted the application 312 from the storage unit 160 (320).

That is, among the plurality of applications 311, 312, 313 and 314 of the server 200, the first and second applications 311 and 312 have been purchased and downloaded by the display apparatus 100. Then, the first application 311 is stored in the display apparatus 100 while the second application 312 has been deleted from the display apparatus 100.

Over time, the number of the downloaded and installed applications 311, 312, 313 and 314 may be dozens of or hundreds of applications. Considering the storage capacity of the storage unit 160, old applications 311, 312, 313 and 314 may be deleted to install new applications 311, 312, 313 and 314.

According to the present exemplary embodiment, when a user selects the applications 311, 312, 313 and 314 from the application list provided by the server 200 through the display apparatus 100, the list may include information showing that the predetermined application 312 has been downloaded to display apparatus 100 but is currently deleted (320).

More specifically, upon deletion of the predetermined application 312 among the applications 311 and 312 stored in the storage unit 160, the display apparatus 100 transmits deletion history information to the server 200. The display apparatus 100 transmits the user profile to the server 200, together with the deletion history information.

The deletion history information may be transmitted when the application 312 is deleted from the display apparatus 100. Otherwise, the display apparatus 100 may store the deletion history information firstly and then transmit the information when a user of the display apparatus 100 logs in the server 200.

Upon receiving the user profile and deletion history information from the display apparatus 100, the server 200 stores the deletion history information corresponding to the user profile.

If the display apparatus 100 logs in the server 200 by using the user profile, the server 200 generate a list of the applications 311, 312, 313 and 314 stored in the server storage unit 230 corresponding to the user profile.

Generating the list corresponding to the user profile may employ various methods and does not limit the spirit of the present inventive concept. For example, the server 200 may display in the list the user's purchase and downloading history for the applications 311, 312, 313 and 314. The server 200 may selectively filter the applications 311, 312, 313 and 314 stated in the list according to various parameters such as age, class, etc.

The server 200 processes the list based on the deletion history information stored in advance. That is, according to the deletion history information that has been received before, the server 200 additionally displays, in an item of the application 312, information showing that the application 312 has been deleted from the display apparatus 100 among the applications 311, 312, 313 and 314 in the generated list. The server 200 transmits the processed list information to the display apparatus 100.

The display apparatus 100 displays an image corresponding to the list information transmitted by the server 200. Then, from the image corresponding to the list, a user may easily identify which application has been deleted from the display apparatus 100 after the applications 311, 312, 313 and 314 have been downloaded.

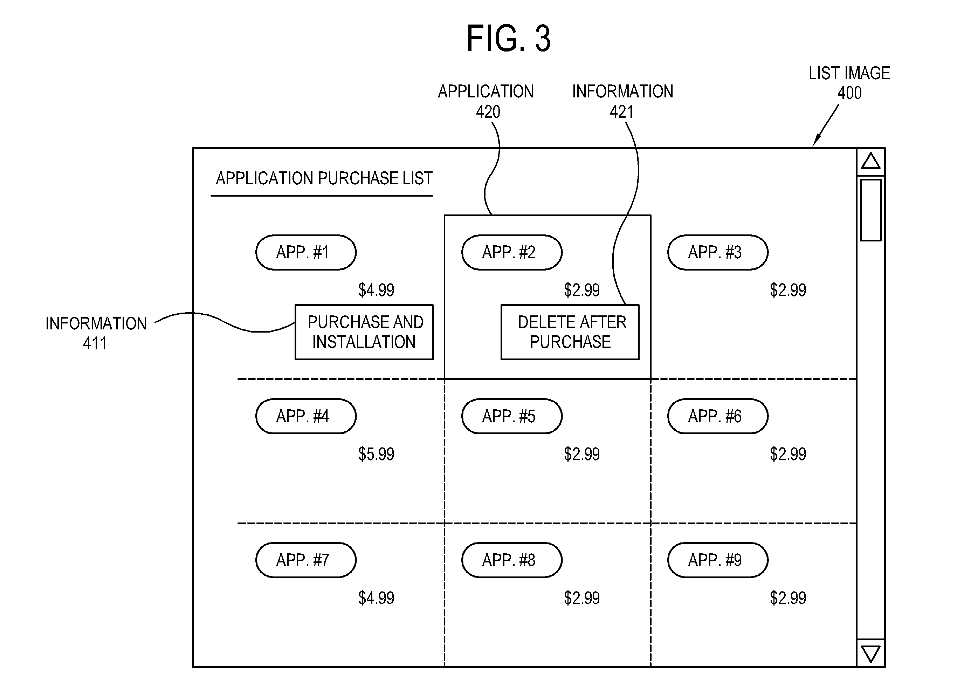

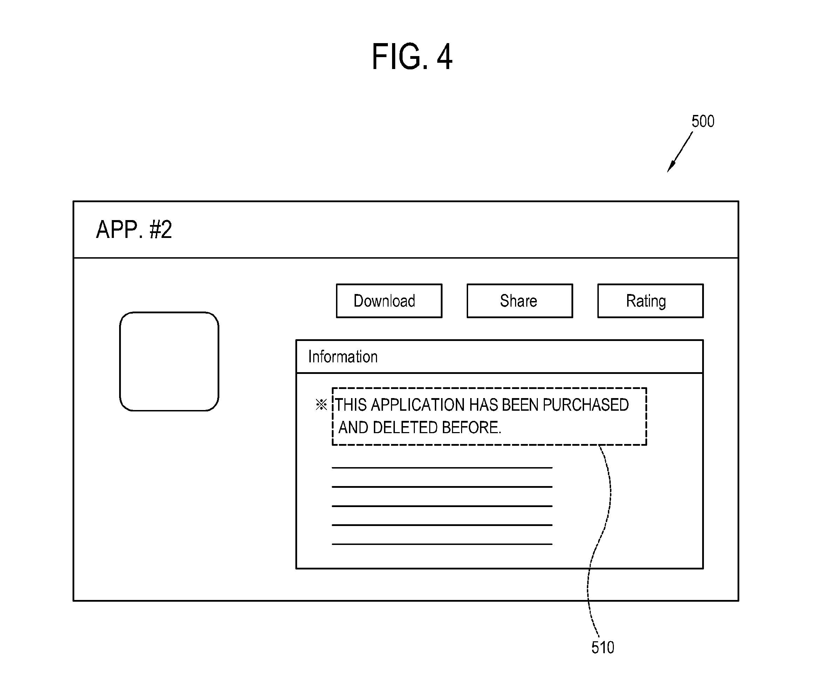

Hereinafter, an example of displaying a deletion history for a predetermined application from an image of a list of applications displayed in the display apparatus 100 will be described with reference to FIGS. 3 and 4. FIGS. 3 and 4 illustrate an example of an image of the list of the applications displayed in the display apparatus 100.

As shown in FIG. 3, a list image 400 which is displayed on the display unit 130 of the display apparatus 100 displays an item for each of the plurality of applications. The item of each application includes brief information such as an application name, category and purchase price.

If a predetermined application has been downloaded to and deleted from the display apparatus 100, an item on the application 420, within the list image 400, shows information 421 regarding such downloading and deletion. Then, a user may easily recognize that the application has already been purchased, downloaded, installed and then deleted from the display apparatus 100.

The list image 400 may have information 411 showing that a predetermined application has been purchased, downloaded and installed, in an item for the application.

The information 411 shows that a particular application has been downloaded from the server 200 like the information 421, but not deleted from the display apparatus 100 unlike the information 421. Among the applications purchased and downloaded by the display apparatus 100, the server 200 may have the information 411 displayed for the application which is not included in the deletion history information transmitted by the display apparatus 100.

If the item for the particular application 420 is selected from the list image 400, an individual application information image 500 which provides detailed information on the applications 311, 312, 313 and 314 may be displayed on the display unit 130 as shown in FIG. 4.

As shown in FIG. 4, the individual application information image 500 includes more detailed information on the application than the list image 400 in FIG. 3. The individual application information image 500 may include information 510 showing that the application has been downloaded to and deleted from the display apparatus 100.

Regarding the images as shown in FIGS. 3 and 4, the list information is generated by the server 200 and provided to the display apparatus 100, and the display apparatus 100 displays an image for the provided list information.

With the image displayed in the display apparatus 100, a user may easily determine which application(s) have been purchased and downloaded before among the applications provided by the server 200, and which application(s) have been deleted from the display apparatus 100 among the applications purchased and downloaded before. Based on such determination, a user may easily select various applications provided by the server 200.

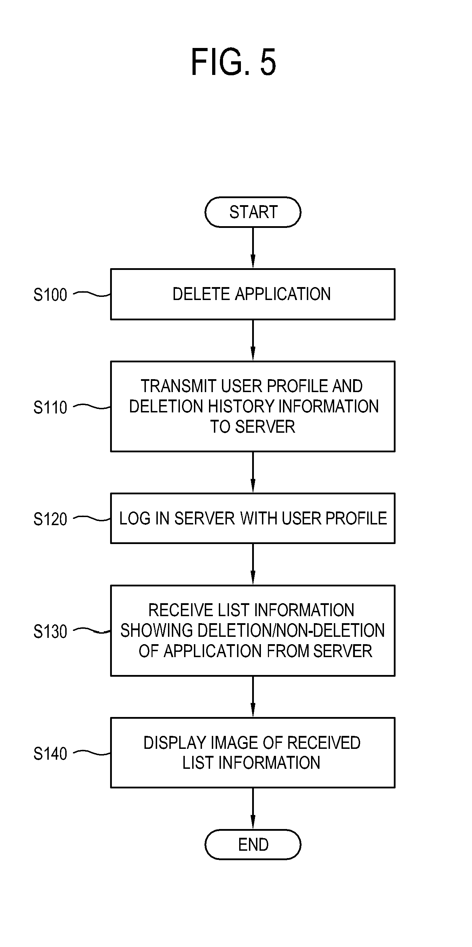

Hereinafter, a control method of the display apparatus 100 according to the present exemplary embodiment will be described with reference to FIG. 5. FIG. 5 is a control flowchart of the control process.

As shown therein, the display apparatus 100 deletes a predetermined application(s) among those stored in the storage unit 160, from the storage unit 160 (S100). The display apparatus 100 transmits the deletion history information, which shows the deletion of the application(s), to the server 200 together with the user profile, according to the deletion of the application(s) (S110).

The display apparatus 100 logs in the server 200 with the user profile (S120). The display apparatus 100 requests the server 200 for the list image of the plurality of applications to download the application(s).

The display apparatus 100 receives list information from the server 200 (S130). The list information which is transmitted to the display apparatus 100 shows deletion/non-deletion of the application(s) according to the deletion history information.

The display apparatus 100 displays an image of the received list information (S140). This image includes the information showing that the application(s) have been deleted from the display apparatus 100.

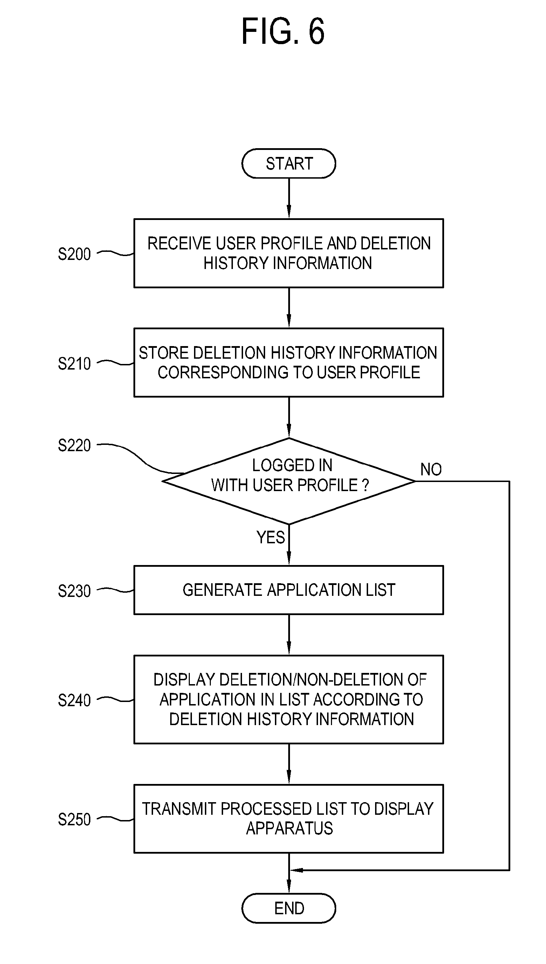

Hereinafter, the control method of the server 200 according to the present exemplary embodiment will be described with reference to FIG. 6. FIG. 6 is a control flowchart of the control process.

As shown in FIG. 6, the server 200 receives the user profile and deletion history information from the display apparatus 100 (S200). The server 200 stores the deletion history information corresponding to the user profile (S210).

If the display apparatus 100 logs in the server 200 with the user profile (S220), the server 200 generates the application list corresponding to the user profile (S230).

The server 200 displays deletion/non-deletion of particular application(s) in the list according to the deletion history information received at operation S200 (S240). The server 200 transmits the processed list to the display apparatus 100 (S250).

Then, an image of an application list which displays a deletion history of the application(s) deleted from the display apparatus 100 may be displayed in the display apparatus 100.

Although a few exemplary embodiments have been shown and described, it will be appreciated by those skilled in the art that changes may be made in these exemplary embodiments without departing from the principles and spirit of the inventive concept, the range of which is defined in the appended claims and their equivalents.

## Claims

1. A display apparatus (100) comprising:
a display unit (130);
a communication unit (140) arranged to communicate with a server (200) that provides a plurality of applications and a list of the plurality of applications;
a storage unit (160) arranged to store therein at least one application downloaded through the communication unit and deletion history information of the at least one application; and
a controller (170) arranged to display on the display unit an image of the list of the plurality of applications to download the at least one application, and to transmit to the server the deletion history information of the at least one application to display on the display unit deletion/non-deletion of the at least one application in the image of the list.

2. The display apparatus according to claim 1, wherein the image of the list comprises a first image arranged to displays an item for each of the plurality of applications, and a second image arranged to displays detailed information of each one of the plurality of applications, and the deletion/non-deletion of the at least one application is displayed in at least one of the first and second images.

3. The display apparatus according to claim 1, wherein the controller is arranged to transmit the deletion history information of the at least one application through the communication unit when the at least one application is deleted.

4. The display apparatus according to claim 1, wherein the controller is arranged to transmit user profile information to the server so that the server provides a list corresponding to a user profile of the display apparatus.

5. The display apparatus according to claim 4, wherein the image of the list further comprises purchase information of the at least one application if a user corresponding to the user profile has purchased the at least one application for downloading.

6. The display apparatus according to claim 4, wherein the controller is arranged to store in the storage unit the deletion history information of the at least one application according to the deletion of the at least one application, and to transmit the deletion history information stored in the storage unit, together with the user profile information, through the communication unit.

7. The display apparatus according to claim 4, further comprising a user input unit (150) arranged to input the user profile information, wherein the controller is arranged to transmit the user profile information input through the user input unit, through the communication unit.

8. The display apparatus according to claim 4, wherein the storage unit is arranged to store therein the user profile information, and the controller is arranged to transmit the user profile information stored in the storage unit, through the communication unit.

9. An application providing apparatus comprising:
a communication unit (140) arranged to communicate with a display apparatus (130);
a storage unit (160) arranged to store therein a plurality of applications; and
a processor (120) arranged to transmit a list of the plurality of applications to the display apparatus for downloading and displays an image of the list in the display apparatus, and upon receiving deletion history information showing the deletion of at least one application from the display apparatus, to process the list to display information on the deletion/non-deletion of the at least one application from the display apparatus, in an image of the list according to the deletion history information.

10. The application providing apparatus according to claim 9, wherein the image of the list comprises a first image arranged to displays an item for each one of the plurality of applications, and a second image arranged to displays detailed information of each one of the plurality of applications, and the deletion/non-deletion of the at least one application is displayed in at least one of the first and second images.

11. The application providing apparatus according to claim 9, wherein the processor is arranged to transmit the list to the display apparatus corresponding to a user profile if the user profile is transmitted by the display apparatus.

12. The application providing apparatus according to claim 11, wherein the image of the list further comprises purchase information of the at least one application if a user corresponding to the user profile has purchased the at least one application for downloading.

13. A control method of a display apparatus, the control method comprising:
deleting (S100)at least one application which is stored in the display apparatus;
transmitting (S110) deletion history information of the at least one application to display deletion/non-deletion of the at least one application in an image of a list of a plurality of applications available for downloading, with respect to a server which provides the plurality of applications; and
displaying (S140) an image of the list by receiving the list displaying deletion/non-deletion of the at least one application from the server.

14. A control method of an application providing apparatus, the control method comprising:
receiving (S200) deletion history information showing deletion of at least one stored application from a display apparatus, from the display apparatus;
generating (S230) a list of a plurality of applications for the display apparatus to download the plurality of applications, and processing the list to display therein information on the deletion of the at least one application from the display apparatus according to the deletion history information; and
transmitting (S250) the processed list to the display apparatus to display an image of the processed list in the display apparatus.
